# EUROPEAN PATENT APPLICATION

(11) **EP 2 327 614 A1**
(43) Date of publication of application: **01.06.2011**
(21) Application number: 10150003.1
(22) Date of filing: 04.01.2010
(51) Int. Cl.: B62J 11/00

(54) **Anti-theft helmet holder device**

(30) Priority: 30.11.2009 IT MI20090385 U
(71) Applicant: OJ Atmosfere Metropolitane S.r.l., 20127 Milano (IT)
(72) Inventor: Merighi, Marcello, I-20127, Milano (IT)
(74) Representative: Cicogna, Franco

(57) **Abstract**

An anti-theft helmet holder device (1), characterized in that said device comprises a first element (2) adapted to be clamped to a handlebar (3) of a vehicle and a second element (8) associated with said first element (2) and including an engagement means, controlled by a key and adapted to lock a ring element of a helmet belt.

## Description

### BACKGROUND OF THE INVENTION

The present invention relates to an anti-theft helmet holder or supporting device.

As is known, the user of a motorcycle or scooter, which does not include a helmet holding cavity, or a lock-latching device, must necessarily carry the helmet away, in parking his/her vehicle, to prevent the helmet from being stolen.

In some cases, the motorcycle user may connect his/her helmet to the vehicle by an anti-theft connecting chain or the like.

However, the above approach is affected by several limitations: in fact, it can be used only in association with the so-called "crash-helmet", and if the chain has an excessive length, or if the helmet bears on the ground, it gets dirty.

Moreover, if the vehicle does not include a specifically designed attachment element or helmet bearing cavity, it would not be advisable to support the helmet on the vehicle or anchor it to the vehicle handlebar by an anchoring chain or belt, since the wind, for example, may cause the helmet to fall away from the vehicle.

### SUMMARY OF THE INVENTION

Accordingly, the aim of the present invention is to provide such a device including a double function of a helmet bearer or holder and a helmet antitheft arrangement.

Within the scope of the above mentioned aim, a main object of the invention is to provide such a helmet holder device which has a very small size and which can be applied to any vehicle including a vehicle handlebar, such as a motorcycle, a scooter, a quad, and so on.

Yet another object of the present invention is to provide such a device which, in addition to prevent the helmet from being stolen, is also adapted to prevent said helmet from accidentally falling as the vehicle is parked and the user does not intend to carry away the helmet.

Yet another object of the present invention is to provide such a device which can be easily used with all available types of helmets, for example standardized helmets, as at present available on the market.

Yet another object of the present invention is to provide such a device which, owing to its specifically designed features, is very reliable and safe in operation.

According to one aspect of the present invention, the above mentioned aim and objects, as well as yet other objects, which will become more apparent hereinafter, are achieved by an anti-theft helmet holder device, characterized in that said device comprises a first element adapted to be clamped to a handlebar of a vehicle and a second element associated with said first element and including an engagement means, controlled by a key and adapted to lock a ring element of a helmet belt.

According to a preferred embodiment, the engagement means comprises a movable pin element engaging a bracket which can be applied to the helmet belt ring element or other like element.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

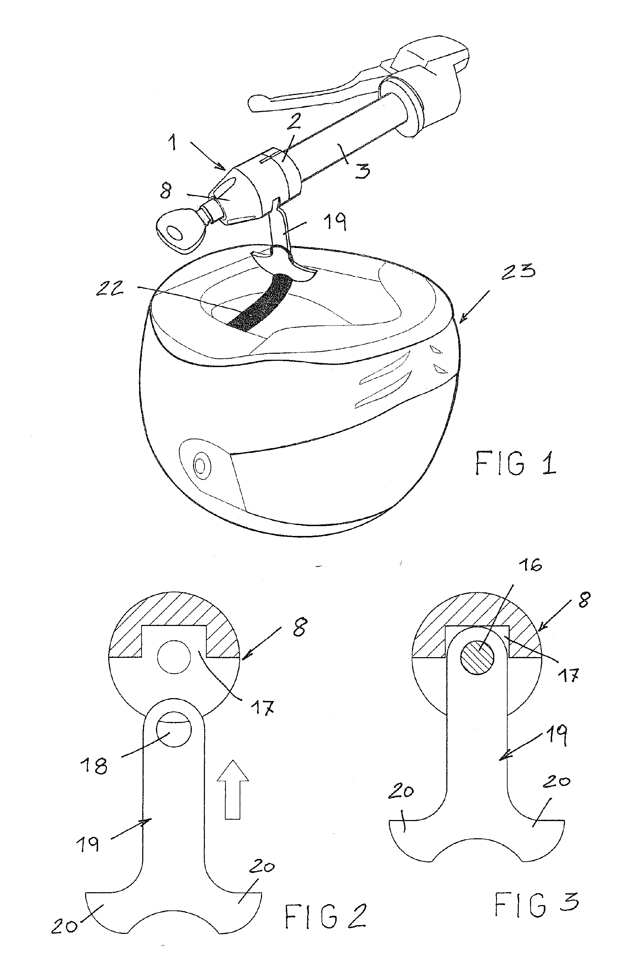

Figure 1 is a perspective view of the anti-theft helmet holder device shown in a use condition thereof;
Figure 2 is a front view showing a locking bracket included in the device according to the invention, as it is inserted into or engaged in the locking pin element;
Figure 3 is a view similar to figure 2, but showing the bracket in its locked position;
Figure 4 is a perspective view showing the device applied to a handlebar before clamping the helmet to the latter, and further showing a series of clamping examples for clamping the locking bracket to the helmet belt;

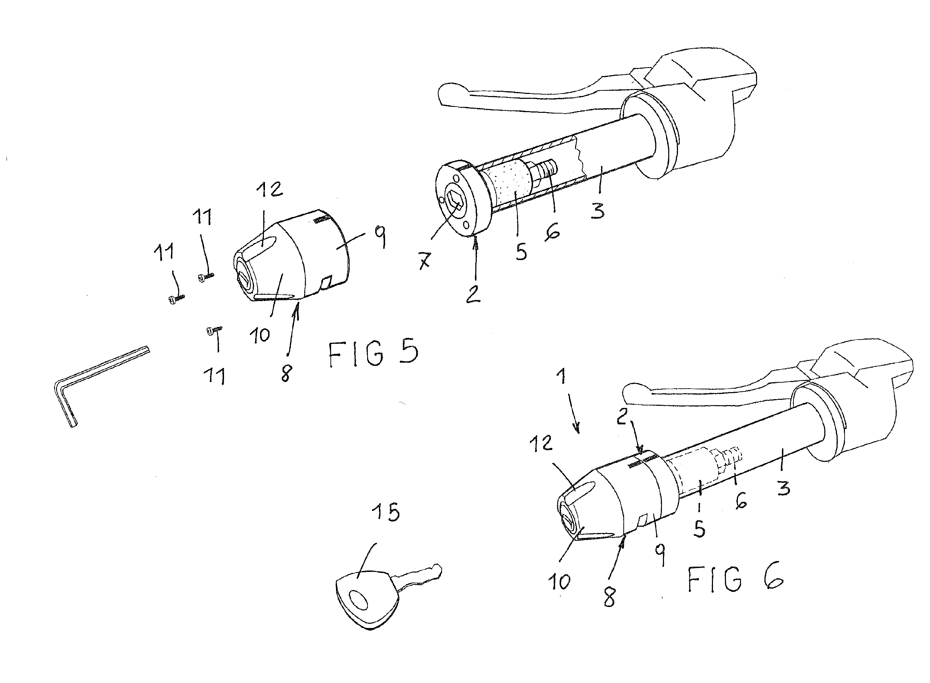

Figure 5 is a partially exploded cross-sectional perspective view of the device according to the present invention;
Figure 6 is a further perspective view of the inventive device applied to a vehicle handlebar;
Figure 7 is a side elevation view, as longitudinally cross-sectioned, showing the device locking bracket being inserted into the locking pin;
   and
Figure 8 is a further side elevation view, as longitudinally cross-sectioned, similar to figure 7, but showing the bracket in a locked position thereof.

### DESCRIPTION OF THE PREFERRED EMBODIMENTS

With reference to the number references of the above mentioned figures, the anti-theft helmet holder device according to the invention, which has been generally indicated by the reference number 1, comprises a first element 2 which can be anchored or clamped to an end portion of a handlebar 3, which latter is constituted by a tube element having two open end portions.

The first element 2 comprises a disc portion 4 therefrom an expansible plug element 5 projects, said plug element being made of a rubber or other material, and axially holding therein a screw 6 having a screw head 7 accessible from the outer side of the disc portion 4.

Accordingly, the first element 2 may be clamped to the handlebar 3 by screwing on the screw 6, thereby causing the plug 5 to expand and the element 2 to be locked within said handlebar tube.

A second element 8, substantially constituted by a cylindric portion 9 meeting with a frustum of cone portion 10 is clamped to the first element 2 by clamping screws 11 engaged in suitable axial seats or recesses 12, said recesses 12 encompassing a further central axial recess or seat 13 holding a lock element 14 therein, driven by a lock key 15.

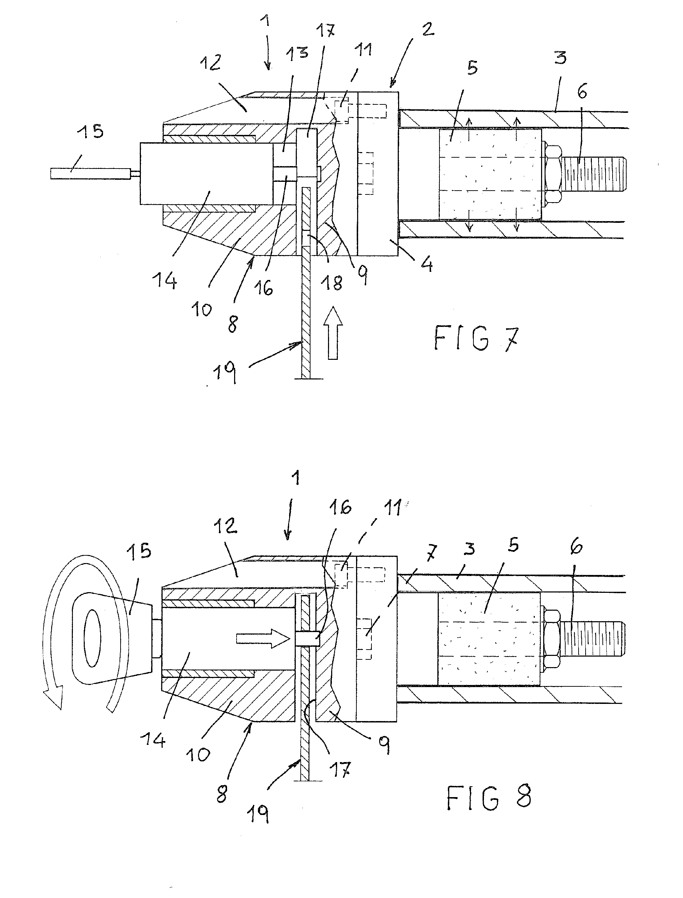

More specifically, said lock 14 comprises a lock pin 16 having two positions, that is an open position, shown in figure 7, and a closed position, shown in figure 8.

At its open position, the pin 16 is substantially withdrawn in the lock thereby it does not interfere against a radially extending seat or recess 17 partially passing through the second element 8.

At its closed position, the pin 16 substantially projects from the lock thereby occupying, in an axial direction, substantially all said radially extending seat or recess 17.

At its closed position, the pin 16 engages with a hole 18 formed at an end portion of a locking bracket 19, which, at the other end portion thereof, comprises a pair of fins 20.

As shown, said locking bracket 19 is so shaped as to be associated with a ring element 21 of a belt 22 of a helmet 23, or other like element.

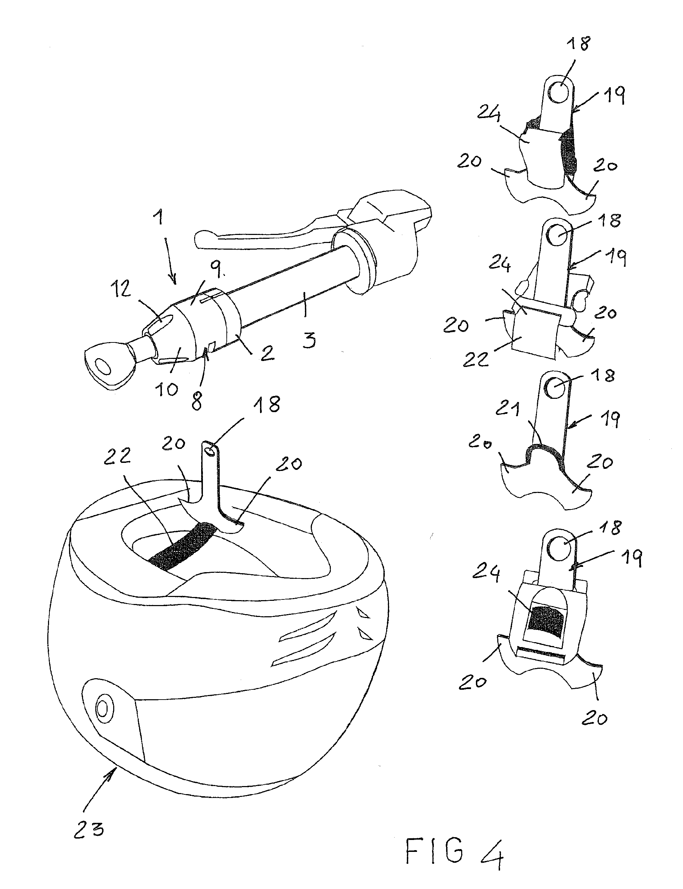

As is schematically shown in figure 4, the locking bracket 19 may also be inserted into other elements of the belt 22, such as the belt buckles, generally indicated by the reference number 24, which may have any desired configuration, depending on the helmet belt type.

In any cases, all the homologated or approved helmets comprise a helmet belt including a belt ring, buckle or other like element, thereinto it is possible to thread or insert said locking bracket 19.

The anti-theft helmet holder device according to the present invention operates as follows.

As the user desires to leave the helmet on his/her parked vehicle, then it will be sufficient to thread the locking bracket 19 into helmet belt ring element and introduce the perforated end portion of said bracket into the radially extending seat or recess 17 of the device.

Then, by using the key 15, the user will close the pin 16 to engage the hole 18 of the locking bracket 19, thereby clamping or anchoring the helmet 23 to the vehicle handlebar.

In this connection it should be pointed out that the provision of said fins 20, will prevent the locking bracket from disengaging from the belt ring, the disengaging being only possible through the perforated end portions, which, as it should be self-apparent, can be freed or disengaged only by using the device operating key.

To recover the helmet, it will be sufficient to unlock, by said key, said pin, withdraw the locking bracket and remove it from the belt ring element.

As the helmet is worn by the user, the locking bracket, which has a very small size, may be held in a user pocket together with its operating key.

It has been found that the invention fully achieves the intended aim and objects.

In fact, the invention provides an anti-theft device which can be used in a very simple and easy manner, allowing a helmet to be clamped to a vehicle handlebar, in a quick manner, to prevent the helmet from being stolen or from accidentally falling away.

The device may be applied to any vehicle including a vehicle handlebar, and, as stated, has a very small size.

Advantageously, the device according to the present invention has the same configuration, and may also have the same function, of a so-called balancing or compensator element, to be clamped to the end portions of the vehicle handlebar, to reduce vibrations of the latter.

In practicing the invention, the used materials, as well as the contingent size and shapes, can be any, depending on requirements.

## Claims

1. An anti-theft helmet holder device, **characterized in that** said device comprises a first element adapted to be clamped to a handlebar of a vehicle and a second element associated with said first element and including an engagement means, controlled by a key and adapted to lock a ring element of a helmet belt.

2. An anti-theft helmet holder device, according to claim 1, **characterized in that** said first element comprises a disc portion therefrom an expansible plug element projects, said plug element being made of a rubber or other suitable material and axially holding therein a screw, said screw having a head screw accessible from an outer side of said disc portion, said first element being clamped to said handlebar by screwing on a clamping screw so as to cause said plug element to be expanded and said first element to be locked within the handlebar tube.

3. An anti-theft helmet holder device, according to claim 1, **characterized in that** said second element substantially comprises a cylindric portion meeting with a frustum of cone portion, said second element being clamped to said first element by clamping screws engaged in axial seats encompassing a further central axially extending seat, said axially extending seat including a key controlled lock, said key controlled lock comprising a lock pin adapted to assume two positions, an open position and a closed position, in said open position said lock pin being substantially withdrawn in said lock and not interfering against a radially extending seat partially passing through said second element, in said closed position said pin substantially projecting from said lock so as to occupy, in an axial direction, substantially all said radially extending seat.

4. An anti-theft helmet holder device, according to one or more of the preceding claims, **characterized in that**, in said closed position, said pin engages a hole formed at an end portion of a locking bracket having, at the other end portion thereof, a pair of fins, said locking bracket being adapted to be associated with a ring element included in a helmet belt.

5. An anti-theft helmet holder device, according to one or more of the preceding claims, **characterized in that** said locking bracket may also be engaged in other belt elements such as belt buckles, which have a configuration depending on the helmet belt type.

6. An anti-theft helmet holder device, according to one or more of the preceding claims, **characterized in that** said device has the same configuration, and may also have the same function, as a so-called balancing or compensating device, connected to the end portions of said handlebar to reduce vibrations of said handlebar.
